# EUROPEAN PATENT APPLICATION

(11) **EP 1 681 754 A1**
(43) Date of publication of application: **19.07.2006**
(21) Application number: 05290108.9
(22) Date of filing: 18.01.2005
(51) Int. Cl.: H02H 9/00

(54) **Protection circuit**

(71) Applicant: ALCATEL, 75008 Paris (FR)
(72) Inventor: Van Den Berg, Eric Jozef Diane, 2560 Nijlen (BE)
(74) Representative: Narmon, Gisèle Marie Thérèse

(57) **Abstract**

A protection circuit (P) for protecting a load (L) against overcurrents, and including input terminals (IN1,IN2) to be coupled to first and second power supply terminals of a power supply, output terminals (OUT1, OUT2) to be coupled to respective terminals of said load (L) , further includes
- an enable output terminal (EOUT) for provision of an enable signal to said enable input terminal (ENin) of said load (L)
- an RC circuit (R1,C1) , a capacitor (C1) of which is coupled between said first (OUT1 ) and second (OUT2) output terminals, a resistor (R1) of which is coupled between said first input terminal (IN1) and said first output terminal (OUT1),
- a switch (SW) coupled in parallel across said resistor (R1), and being controlled by said enable signal received from
- an enable control block (ECB), for sensing the current through said resistor (R1) via sensing input terminals coupled across said resistor (R1) , and for generating said enable signal upon detecting that said current drops below a predetermined threshold, thereby further providing said enable signal to said enable output terminal (EOUT) .

## Description

The present invention relates to a protection circuit to be used for protecting a load. Such a load may consist of an electronic circuit such as circuitry placed on a printed circuit board, hereafter abbreviated with PCB, or of a DC/DC converter, or more generally DC powered devices.

Protection circuits are used throughout the electronics industry and are for instance described in European patent EP 0 848 472. Basically such protection circuits are intended to protect the DC source and other loads powered by the DC source against inrush currents during hot insertion of a load. Similarly, when detaching the supply terminals from the load, for instance during extraction of the board from the power feeding connector, the protection circuit has to protect the load against possible damage.

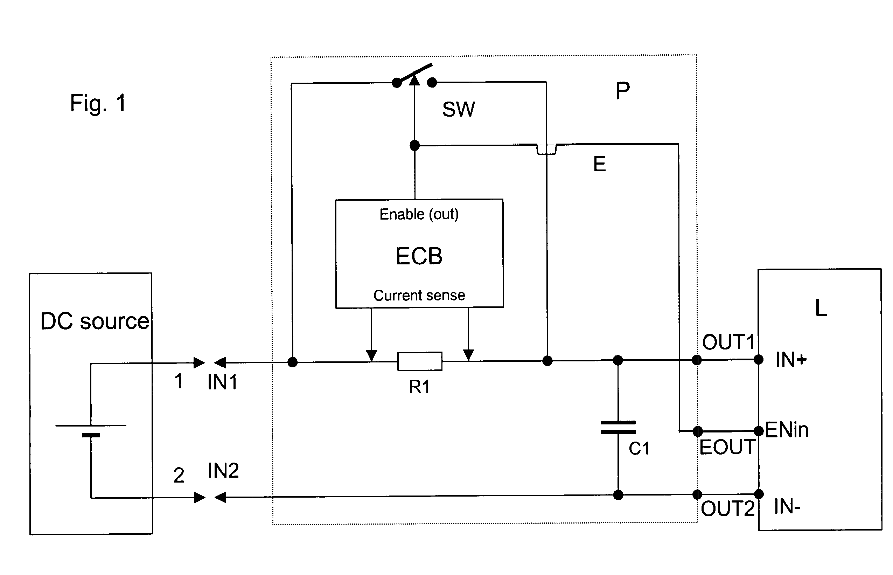

Traditional hot insertion circuits such as the one disclosed in the above cited European patent, mainly include an active device, such as the field effect transistor T1 of Fig. 1 of this prior art document, in combination with a charging and discharging circuit for this active device. , such as the first time constant means and the enable controlled switch.

As can be observed from Fig. 1 of this prior art document these charging and discharging circuits, together with the active device itself, require a significant amount of area and thus contribute to the cost of the protection circuit.

An object of the present invention is therefore to provide a protection circuit of the above known kind, but which. is smaller, and, as a consequence, cheaper.

According to the invention this object is achieved by the fact that the protection circuit includes the features as set out in the characterizing portion of claim 1.

In this way, the protection circuit merely comprises a very simple RC circuit, together with a switch in parallel across the resistor of this RC circuit, and an enable control block for controlling this switch and the enable input of the load. Since the capacitor of this RC circuit may consist of the bulk, bypass or tank capacitor needed for proper operation of the load itself, only very few extra components are needed.

Furthermore since the load is kept disabled, until the switch is closed, by the coupling of the load enable input to the switch control input, it is guaranteed that no start-up spikes or excessive current is drawn to the load.

An additional characteristic feature of the present invention is set out in claim 2.

In this way a transistor is used as the switch. Since this transistor is merely used as a switch and not as a dynamic resistor as was the case for the prior art protection circuits, a smaller transistor involving less power consumption, less area and thus less cost may be used.

Moreover, in the event of a failure which causes the load to behave as a short circuit, the short circuit current will only be drawn for a short amount of time because the gate of this switch transistor is immediately pinched off, in the assumption that the impedance of the electrical connection between the DC source and the hot insertion circuit is relatively high compared to the impedance of the short. In this case the remaining voltage at the input of the hot insertion circuit is too low to maintain the switch transistor in an ON state.

A further characteristic feature of the present invention is set out in claim 3.

The additional bypass capacitor thereby ensures that upon insertion there is sufficient turn-on delay for the switch transistor guaranteeing proper start up and operation of the enable control block before activating the switch transistor. The load and the switch are thus temporarily disabled during insertion guaranteeing a proper start-up of the enable control block.

Yet another characteristic feature is set out in claim 4.

The control block thereby comprises a sensing transistor, for sensing the voltage across the resistor of the RC circuit which is a direct measure for the current through the resistor of the RC circuit of the protection circuit. This voltage will be high if sufficient current flows through this resistor . High currents may occur during insertion, extraction or short-circuits of the load , resulting in the sensing transistor to conduct, since its base-emitter voltage has raised sufficiently high due to the voltage drop across the resistor . If the sensing transistor conducts, the voltage across the pull-down resistor will be high, which keeps the switch open and the load disabled. During normal operating conditions the current through the resistor of the RC circuit is sufficiently low thereby preventing the sensing transistor from conducting. The voltage across the pull-down resistor will accordingly be reduced. This results in the opening of the switch together with the enabling of the load

Other characteristics of the present invention are set out in the appended claims.

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein
Fig. 1 shows a basic schematic of a protection circuit according to the invention and.
Fig. 2 shows a transistor-level embodiment of a protection circuit according to the invention.

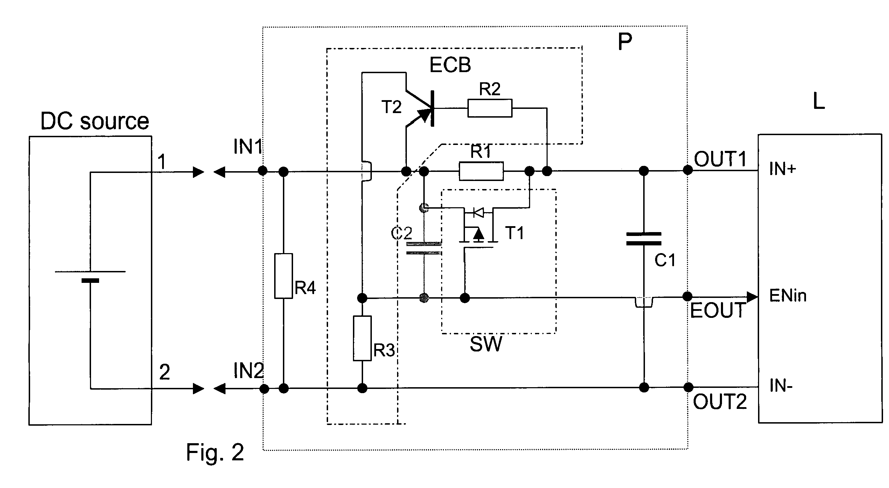

The present invention is of interest in electronics systems, for instance telecommunications systems, where it is often necessary to exchange cards or printed circuit boards, hereafter abbreviated with PCB, while the remaining circuit cards are in an operating state. When inserting or extracting a card to or from a backplane or board, several amperes can flow in the supply lines of the card, as well as in the board power supply of the backplane. If no precautions are taken, this board power supply, as well as the electronic circuitry on the card , can be damaged. Referring to Figs. 1 and 2, the electronic circuitry on the card is denoted by L and the main supply lines to this load are denoted 1 and 2. To protect the load from overcurrents during hot insertion or hot extraction conditions, protection circuits are provided. Classical protection circuits such as the one disclosed in the aforementioned European Patent are based upon a power transistor which is slowly turned on or off by means of charging and discharging circuits. As is well known these power transistors are bulky and consume a lot of power and area.

The protection circuit P of the invention has a different architecture compared to these of the prior art . Its main functional blocks are denoted in Fig. 1, and comprise an RC circuit, comprising resistor R1 and capacitor C1, a switch across the resistor of the RC circuit and a control block for controlling the switch as well as the enable input terminal ENinof the load.

As shown in Fig. 1, the protection circuit P has first and second input terminals, respectively denoted as IN1 and IN2, and first and second output terminals, denoted OUT1 and OUT 2. The input terminals are to be coupled to respective terminals of a DC power supply. The protection circuit further comprises an enable output terminal, denoted EOUT, to be coupled to an enable input terminal ENin of the load, whereas the first and second output terminals of P are to be coupled to the supply input terminals IN+ and IN- of the load L.

The RC circuit comprises resistor R1 coupled between IN1 and OUT1, and a capacitor C1, coupled between OUT1 and OUT2. It is to be remarked that this capacitor C1 may consist of the bulk, bypass or tank capacitor needed for proper operation of the load. No specific additional capacitor is thus needed to be placed in the protection circuit itself.

The conductive path of the switch is coupled across the resistor R1, and the switch is controlled by the enable signal E which is also fed via the enable output terminal EOUT to the enable input terminal ENin of the load L. This enable signal is generated by the enable control block, denoted ECB, which has sensing inputs coupled to the terminals of R1 . Its function is to sense the current through the protection circuit, which corresponds to the current through R1, and to compare it with a predetermined threshold.. At the moment of hot insertion a temporary high current flows through the RC circuit. If the current through R1 is higher than the predetermined threshold, the switch SW remains open, and the load is not activated by the enable signal . During normal operating conditions the current through R1 is lower than this threshold. From that moment the enable signal will change state to close the switch and to activate the load.

A simple embodiment for realizing the protection circuit is shown in Fig. 2. Therein the switch comprises a transistor T1, for instance a MOSFET. The enable control block ECB basically includes a sensing transistor T2 for sensing the current through R1, and a pull-down resistor R3 to drive the enable signal E to the active state after the insertion transient. If the current through R1 is sufficiently high, the voltage across R1, which relates to the base-emitter voltage of T2 will reach 0.7 V , turning on T2. T2 will thereupon conduct current in its active region, which results in a strong pull up of the enable signal, which corresponds to the disabled state for the switch and load. During normal operating conditions the current through R1 is below this threshold, turning T2 off. The voltage drop across R3 will then drop to zero, pulling the enable signal down, thereby activating the load. By the pulling down of EOUT, the gate-source voltage of T1 increases, such that T1 will conduct and that the switch will accordingly be open

In the embodiment depicted in Fig. 2 the enable control block further includes a protection resistor R2 for protection of the base-emitter diode of T2 during insertion of P. Also an additional bypass capacitor C2 is added in parallel to the gate-source capacitor of T1. Its function is to delay the turning on of T1, building in an additional degree of safety.

An additional but optional resistor R4 is also placed for improving the discharging of C1 after extraction of P, if this is not accomplished by the load.

Of course other implementations than these that are depicted in Fig. 2 are possible.

While the principles of the invention have been described above in connection with specific apparatus, it is to be clearly understood that this description is made only by way of example and not as a limitation on the scope of the invention, as defined in the appended claims.

## Claims

1. Protection circuit (P) for protecting a load (L) having an enable input (ENin) terminal against overcurrents, said protection circuit including :
- first and second input terminals (IN1,IN2) to be coupled to first and second power supply terminals (1,2) of a power supply,
- first and second output terminals (OUT1, OUT2) to be coupled to respective terminals (IN+,IN-) of said load (L),
**characterised in that** said protection circuit (P) further includes
- an enable output terminal (EOUT) for provision of an enable signal to said enable input terminal (ENin) of said load (L)
- an RC circuit (R1,C1), a capacitor (C1) of which is coupled between said first (OUT1) and second (OUT2) output terminals, a resistor (R1) of which is coupled between said first input terminal (IN1) and said first output terminal (OUT1),
- a switch (SW) coupled in parallel across said resistor (R1), and being controlled by said enable signal received from
- an enable control block (ECB), for sensing the current through said resistor (R1) via sensing input terminals coupled across said resistor (R1), and for generating said enable signal upon detecting that said current drops below a predetermined threshold, thereby further providing said enable signal to said enable output terminal (EOUT) .

2. Protection circuit (P) according to claim 1, wherein said switch (SW) comprises a transistor (T!), of which the conductive terminals are coupled to respective terminals of said resistor (R1) and of which the control terminal is controlled by said enable signal.

3. Protection circuit (P) according to claim 2 further including a capacitor (C2) coupled between the first input terminal (IN1) and said enable output terminal (EOUT) and adapted for storing extra charge during insertion

4. Protection circuit (P) according to any of the previous claim 1 to 3, wherein the enable control block (ECB) comprises a sensing transistor (T2), its conductive path being coupled between the first input terminal (IN1) and the enable output terminal (EOUT), its control terminal being coupled to said first output terminal (OUT1), said control block further comprising a pull down resistor (R3) coupled between said enable output terminal (EOUT) and said second output terminal (OUT2) which is coupled to said second input terminal (IN2).

5. Protection circuit (P) according to claim 4 wherein said enable control block (ECB) further comprises a protection resistor (R2) for protecting said sensing transistor (T2) and coupled between said control terminal of said sensing transistor (T2) and said first output terminal (OUT1).

6. Protection circuit (P) according to any of the previous claims 1 to 4 further including an additional resistor (R4) coupled between said first (IN1) and second (IN2) input terminals for discharging (C1) said capacitance of said RC circuit during decoupling of said protection circuit (P) from said power supply .
